(19) Europäisches Patentamt

European Patent Office

Office européen des brevets

(11) **EP 0 829 793 B1**

(12) **EUROPEAN PATENT SPECIFICATION**

(45) Date of publication and mention
of the grant of the patent:
**04.06.2003 Bulletin 2003/23**

(51) Int Cl.⁷: **G05D 11/13**, G05D 7/06

(21) Application number: **97202471.5**

(22) Date of filing: **11.08.1997**

(54) **Method for momentarily identifying a gas or liquid flow**

Methode zur sofortigen Identifizierung eines Gas- oder Flüssigkeitsstroms

Méthode d'identification immédiate du débit d'un gaz ou d'un liquide

(84) Designated Contracting States:
**AT BE CH DE DK ES FR GB IT LI LU NL SE**

(30) Priority: **06.09.1996 NL 1003973**

(43) Date of publication of application:
**18.03.1998 Bulletin 1998/12**

(73) Proprietor: **BERKIN B.V.**
**NL-7261 AK Ruurlo (NL)**

(72) Inventor: **Boer, Hendrik Jan**
**7241 JJ Lochem (NL)**

(74) Representative: **Koppen, Jan, Drs.**
**c/o OCTAD**
**P.O.Box 91**
**3980 CB Bunnik (NL)**

(56) References cited:
| | |
|---|---|
| EP-A- 0 395 126 | EP-A- 0 572 108 |
| DE-A- 2 723 809 | GB-A- 2 026 704 |
| US-A- 4 790 194 | US-A- 5 036 701 |
| US-A- 5 388 604 | US-A- 5 511 416 |

## Description

The invention relates to a method for momentarily identifying a fluid - gas or a liquid, or a composition thereof -, which is brought to flow through a conduit - by using a thermal mass-flow meter including a heating element mounted around a tube connected at both ends to said conduit (1) and with temperature sensors arranged on the tube symmetrically at both sides of the heating element, said sensors providing signals, the difference of which constitutes an output signal of the mass-flow meter, thus being a measure of the mass-flow of the fluid through the conduit, whereby said measure is continuously determined in that a portion $\phi_{v_c}$ of said fluid flows through the bypass tube and is heated by the heating element so that the output signal indicates the shift of the temperature profile of the flow $\phi_{v_c}$ through the bypass tube, thus being characteristic for the actual combination of physical properties of the fluid composition.

The use of a thermal mass-flow meter - with heating element and temperature sensors - is known from the US Patent no. 5,036,701. It is mounted on a conduit to measure the mass-flow of a fluid through said conduit. The mass-flow meter includes a tube bypassing a section of the conduit. On the tube a heating element is arranged and symmetrically thereto, at both ends of the heating element, temperature sensors, the output signals of which provide an output signal of the mass-flow meter.

Also in the US-A-4487062 a mass-flow meter is shown. It is shunted to a conduit, over an orifice.

In the description of the method as given hereinbefore, 'the composition' of the fluid is understood to refer to quality, but especially also to quantity; in which concentration a specific component is present in a gas (mixture), statically, but also dynamically 'in the time'. Concentrations may change, e.g., by altering additions of the substance in question. Thus, data are obtained on the course of the composition in question; the extent to which it changes: to wit: 'on line'. Such data are of importance for various processes; e.g., in the semiconductor industry where, for certain processes, such as Chemical Vapour Deposition - CVD -, it is necessary to keep the concentration of the reaction-gas, which causes films of a material to precipitate onto a substrate, as constant as possible.

On-line measurements (i.e., measurements during the process) of the said type are not carried out as yet; data on, e.g., the concentration, are 'calculated back' from the result and then fed back to the device by which said concentrations are controlled, such as in a CVD process: the 'bubbler', by means of which a reaction-gas is fed to a carrier-gas.

It is possible, however, to carry out on-line measurements of the said type with the help of the method according to the invention. For this purpose, said method is characterised in that said tube (2) is capillary and is arranged to bypass an orifice (4) having an adjustable size in said conduit (1), said output signal is compared with corresponding values of combinations of physical properties for various compositions of the fluid according to a table, thereby providing identification of the fluid on the basis of the concentration of the components) in the fluid.

The said physical properties are: the density $\rho$, the viscosity $\mu$ and the heat capacity $C_p$. Examples of fluids as referred to here are mixtures of carrier-gases $H_2$ and $N_2$ with additions of evaporated substances, such as TEOS (triethyl orthosilicate), $SiCl_4$, $TiCl_4$ and $H_2O$, but also pure substances.

Along an orifice, there occurs a pressure drop $\Delta p$, the size of which depends on the density $\rho$ of the fluid in question and on the volume flow $\phi_{v_o}$ through the orifice. When the pressure drop $\Delta p$ is now determined and the volume flow $\phi_{v_o}$ is known, the density $\rho$ may therefore be determined:

$$\Delta p = C_o \cdot \rho \cdot \phi_{v_o}^2 \qquad \text{-(1),}$$

where $C_o$ is a constant depending on the dimensions of the orifice.

And said pressure drop $\Delta p$ is measured using a measuring capillary: the flow $\phi_{v_c}$ through the capillary is laminar, which means that said flow is proportional to the $\Delta p$.

There applies:

$$\Delta p = C_c \cdot \mu \cdot \phi_{v_c} \qquad \text{-(2),}$$

where:

$C_c =$      a constant depending on the dimensions of the capillary;

$\mu =$      the viscosity of the fluid;

$\phi_{v_c} =$      the volume flow through the capillary.

Since the orifice and the capillary are mounted in parallel to one another, there applies:

$$\Delta p \text{ capillary} = \Delta p \text{ orifice} \qquad \text{-(3),}$$

which means that $\phi v_c$ is proportional to $\phi_{v_o}^2$. Furthermore, the dimensions of the capillary and the orifice are chosen in such a manner that $\phi_{v_c}$ is much less than $\phi_{v_o}$. The total flow through this system then approximately equals $\phi_{v_o}$.

The $\phi v_c$ is measured using a so-called thermal sensor on the capillary, such as it is disclosed, e.g., in USP 5,036,701. The shift measured - $\Delta T$ - of the temperature profile, as in the event of a fluid flow this is realised by using a heating coil around the capillary, for such a sensor is a measure of the occurring mass flow. There applies:

$$\Delta T = C'.\rho.C_p.\phi_{v_c} \qquad -(4),$$

where:

C' = a constant;
$\rho$ = the density of the fluid;
$C_p$ = the heat capacity of the fluid;
$\phi_{v_c}$ = the volume flow through the capillary already referred to.

From the equations (1), (2), (3) and (4), there follows the equation

$$\Delta T = C''.\rho^2.C_p.\phi_{v_{total}}.1/\mu, \qquad -(5)$$

where:

C'' = a constant;
$\rho$ = the density of the fluid;
$C_p$ = the heat capacity of the fluid;
$\phi_{v_{total}}$ = the volume flow of the fluid through the orifice;
$\mu$ = the viscosity of the fluid.

By measuring $\Delta T$ at a known total flow and under the condition that $\phi_{v_c}$ is much less than $\phi_{v_o}$, the term $\rho^2 C_p/\mu$ may therefore be determined.

When the values of $\rho^2 C_p/\mu$ are compared with values, also of $\rho^2 C_p/\mu$, of a fluid, classified in a table, consisting of combinations of the same components), they provide data on the concentrations of the components) in the fluid. The measured values provide the fingerprints of the fluid, as it were.

In most cases, the composition of a fluid as referred to here is achieved by adding a component to the fluid using a device appropriate for that purpose. In accordance with an embodiment of the method according to the invention, the output signals obtained from the thermal mass-flow meter are fed back to a device controlling the composition of the fluid (5) in such a manner that said composition is kept constant of is adjusted to a required pattern in time.

Feeding a reaction gas to a carrier-gas then takes place, e.g., in a so-called 'bubbler'. A mixture which is used, e.g., in a CVD process, contains $H_2$ as a carrier-gas and $(CH_3)_3$ In (trimethyl indium, abbreviated TMI) as a reaction gas, added to the carrier-gas in a bubbler, by evaporating the solid substance. As a carrier-gas, a gas other than $H_2$ may be chosen and, as a reaction gas, a gas or vapour of a substance other than TMI.

The invention also comprises a device for carrying out the method according to the invention.

The method is further explained by reference to the drawing which shows it schematically.

Through the conduit 1, the fluid having the volume flow $\phi_{v_{tot}}$ flows in the direction indicated by the arrow 5. In the conduit 1, there is located the orifice 4 through which the volume flow $\phi_{v_o}$, flows in the direction indicated by the arrow 6. The pressure drop $\Delta p$ over said orifice 4 is measured using a 'shunt' — a capillary 2 — through which flows the volume flow $\phi_{v_c}$ branched off from $\phi_{v_{tot}}$, provided with a thermal mass-flow meter which consists of a heat source 3, on either side of which the temperature of the fluid flowing through the capillary is measured: $T_1$ and $T_2$, respectively. As explained above, the change of the measured temperature profile $(T_2 - T_1)$ is a measure of the pressure drop $\Delta p$ over the orifice 4.

The output signal generated by the mass-flow meter may be fed back to the device controlling the addition of one or more components - e.g., a bubbler in which a carrier-gas is mixed with a (reaction) gas added thereto.

A change in the density of the fluid may be measured directly by using a device according to the invention, implemented in duplicate, under the condition that $C_p$, $\mu$ and the total flow do not change. In this case, there then flows a clean (carrier) gas through the first device, and that same (carrier) gas flows through the second device, with one or more components added thereunto.

The resistances of the sensors (the flow meters) of the two devices are then placed in a Wheatstone-bridge. The output signal then is a direct measure of the change in density.

**Claims**

1. Method for momentarily identifying a fluid - gas or a liquid, or a composition thereof -, which is brought to flow through a conduit (1) - by using a thermal mass-flow meter including a heating element (3) mounted around a tube (2) connected at both ends to said conduit (1) and with temperature sensors (T1, T2) arranged on the tube (2) symmetrically at both sides of the heating element (3), said sensors providing signals, the difference of which constitutes an output signal of the mass-flow meter, thus being a measure of the mass-flow of the fluid (5) through the conduit (1), whereby said measure is continuously determined in that a portion $\phi_{v_c}$ of said fluid flows through the bypass tube (2) and is heated by the heating element (3) so that the output signal indicates the shift of the temperature profile of the flow $\phi_{v_c}$ through the bypass tube, thus being characteristic for the actual combination of physical properties of the fluid composition,

   **characterised in that** said tube (2) is capillary and is arranged to bypass an orifice (4) having an adjustable size in said conduit (1), said output signal is compared with corresponding values of combinations of physical properties for various compositions of the fluid according to a table, thereby providing identification of the fluid on the basis of the concentration of the component(s) in the fluid.

2. Method according to claim 1,
**characterised in that** output signals obtained from the thermal mass-flow meter are fed back to a device controlling the composition of the fluid (5) in such a manner that said composition is kept constant or is adjusted to a required pattern in time.

3. Method according to claim 2,
**characterised in that** the fluid (5) consists of a carrier-gas, with a reaction gas being added in, e.g., a so-called bubbler, and that the output signals obtained from the thermal mass-flow meter are fed back to the bubbler for controlling the addition of reaction-gas such, that any difference between an actual output signal and a signal, expressing a desired combination is removed.

4. Method according to claim 3,
**characterised in that** the carrier-gas is hydrogen gas and the reaction gas is trimethyl indium $(CH_3)_3In$, abbreviated TMI.


**Patentansprüche**

1. Verfahren zum augenblicklichen Identifizieren eines Fluids - eines Gases oder einer Flüssigkeit, oder aber einer Zusammensetzung derselben -, das durch eine Leitung (1) hindurch zum Strömen gebracht wird - mit Hilfe eines thermischen Massendurchsatzmessers mit einem Heizelement (3), das um ein Rohr (2) herum vorgesehen und an beiden Enden mit der genannten Leitung (1) verbunden ist, und mit Temperatursensoren (T1, T2), die symmetrisch an beiden Seiten des Heizelementes (3) auf dem Rohr (2) angeordnet sind, wobei die genannten Sensoren Signale schaffen, deren Differenz ein Ausgangssignal des Massendurchsatzmessers bildet, wobei dies ein Maß des Massendurchsatzes des Fluids (5) durch die Leitung (1) ist, wobei das genannte Maß kontinuierlich dadurch ermittelt wird, dass ein Teil $\phi v_c$ des genannten Fluids durch das Umleitungsrohr (2) strömt und durch das Heizelement (3) erhitzt wird, so dass das Ausgangssignal die Verschiebung des Temperaturprofils des Flusses $\phi_{V_c}$ durch das Umleitungsrohr angibt, was auf diese Weise kennzeichnend ist für die wirkliche Kombination physikalischer Eigenschaften der Fluidzusammensetzung,
**dadurch gekennzeichnet, dass** das genannte Rohr (2) kapillar ist und vorgesehen ist zum Umleiten des Fluids, wobei die Öffnung (4) in der genannten Leitung (1) eine einstellbare Größe hat, wobei das genannte Ausgangssignal mit entsprechenden Werten von Kombinationen physikalischer Eigenschaften für mehrere Zusammensetzungen des Fluids entsprechend einer Tabelle verglichen wird, wodurch auf Basis der Konzentration der Komponente(n) in dem Fluid eine Identifikation des Fluids geschaffen wird.

2. Verfahren nach Anspruch 1, **dadurch gekennzeichnet, dass** die von dem thermischen Massendurchsatzmesser erhaltenen Ausgangssignale zu einer Anordnung zurückgekoppelt werden, welche die Zusammensetzung des Fluids (5) derart kontrolliert, dass die genannte Zusammensetzung konstant gehalten oder zu einem in der Zeit erforderlichen Muster geregelt wird.

3. Verfahren nach Anspruch 2, **dadurch gekennzeichnet, dass** das Fluid (5) aus einem Trägergas besteht, wobei ein Reaktionsgas in einem sog. Luftrührwerk hinzugefügt wird, und dass die aus dem thermischen Massendurchsatzmesser erhaltenen Ausgangssignale zu dem Luftrührwerk zurückgekoppelt werden zur Steuerung der Hinzufügung von Reaktionsgas, so dass eine Differenz zwischen einem wirklichen Ausgangssignal und einem Signal, das eine gewünschte Kombination ausdrückt, ausgeglichen wird.

4. Verfahren nach Anspruch 3, **dadurch gekennzeichnet, dass** das Trägergas Wasserstoffgas und das Reaktionsgas Trimethylindium $(CH_3)_3In$, abgekürzt TMI ist.


**Revendications**

1. Procédé permettant d'identifier momentanément un fluide - un gaz ou un liquide ou une composition de ces derniers -, qui est porté à circulation à travers un conduit (1) - par l'utilisation d'un débitmètre de masse thermique muni d'un élément chauffant (3) monté autour d'un tube (2) relié aux deux extrémités audit conduit (1) et de capteurs de température (T1, T2) disposés de façon symétrique sur le tube (2) des deux côtés de l'élément chauffant (3), lesdits capteurs fournissant des signaux, dont la différence constitue un signal de sortie du débitmètre de masse thermique, ce qui constitue une mesure du flux de masse du fluide (5) circulant à travers le conduit (1), ladite mesure étant déterminée de façon continue du fait qu'une partie $\phi_{V_c}$ dudit fluide circule à travers le tube de dérivation (2) et est chauffée par l'élément chauffant (3) de façon que le signal de sortie indique le décalage du profil de température du flux $\phi v_c$ circulant à travers le tube de dérivation, ce qui est caractéristique pour la combinaison réelle des propriétés physiques de la composition du fluide, **caractérisé en ce que** ledit tube (2) est capillaire et est disposé de façon à dériver un orifice (4) dont la grandeur est réglable dans ledit conduit (1), ledit signal de sortie est comparé avec des valeurs correspondantes de combinaisons de propriétés physiques pour diverses compositions du fluide selon un tableau, ce qui fournit l'identification du fluide à base de la concentration du (des) composant(s) dans le fluide.

2. Procédé selon la revendication 1, **caractérisé en ce que** les signaux de sortie provenant du débitmètre de masse thermique sont rétro-couples à un dispositif déterminant la composition du fluide (5) de façon que ladite composition soit maintenue constante ou soit réglée à une configuration désirée dans le temps.

3. Procédé selon la revendication 2, **caractérisé en ce que** le fluide est constitué par un gaz porteur et un gaz de réaction est ajouté dans, par exemple, un soi-disant barboteur, et **en ce que** les signaux de sortie obtenus à partir du débitmètre de masse thermique sont rétrocouplés au barboteur afin de commander l'addition du gaz de réaction de façon que toute différence se produisant entre un signal de sortie réel et un signal exprimant une combinaison désirée soit enlevée.

4. Procédé selon la revendication 3, **caractérisé en ce que** le gaz porteur est constitué par du gaz hydrogène et que le gaz de réaction est constitué par du triméthylindium $(CH_3)_3In$, qui est abrégé TMI.

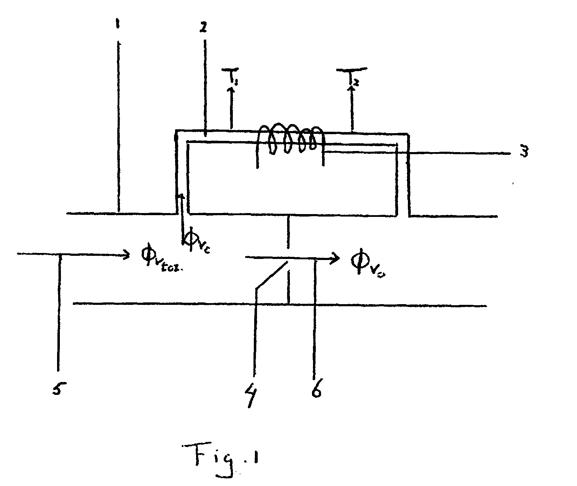

$$Fig.1$$